Europäisches Patentamt

European Patent Office

Office européen des brevets

(19)

(11) Veröffentlichungsnummer: **0 276 412**
**A2**

## EUROPÄISCHE PATENTANMELDUNG

(21) Anmeldenummer: 87117804.2

(22) Anmeldetag: 02.12.87

(51) Int. Cl.⁴: **G01B 11/30**

(30) Priorität: 30.01.87 DE 3702705

(43) Veröffentlichungstag der Anmeldung:
03.08.88 Patentblatt 88/31

(84) Benannte Vertragsstaaten:
**DE FR GB IT NL SE**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Ellenrieder, Peter, Ing.-grad.**
**Untermaurach 2**
**D-7770 Überlingen-Nussdorf(DE)**
Erfinder: **Oppelt, Hans Friedrich**
**Lavendelweg 15**
**D-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Schnittbildoptik.**

(57) Zur Beobachtung von Strukturen, beispielsweise von Schweißnähten innerhalb eines Hohlkörpers wird eine Schnittbildoptik vorgesehen, die durch eine Öffnung von vermindertem Durchmesser in den Hohlkörper einführbar ist. Diese Schnittbildoptik enthält zwei Boroskope (10,16) mit parallein Schäften (12,18) und abgewinkelten Köpfen (14,20) für Beleuchtung und Beobachtung. In einer ersten Stellung liegen die Köpfe (14,20) antiparallel nebeneinander und gestatten die Einführung der Schnittbildoptik durch die Öffnung. In einer zweiten Stellung sind die Köpfe (14,20) gespreizt und bilden eine Basisstrecke in dem Hohlkörper für das Schnittbildverfahren.

FIG.2

## Schnittbildoptik

Der Erfindung liegt die Aufgabe zugrunde, Strukturen in einem Hohlkörper zu beobachten, dessen Innenraum nur durch eine Öffnung mit vermindertem Durchmesser zugänglich ist. Insbesondere geht es darum, Schweißnähte im Inneren eines solchen Hohlkörpers zu kontrollieren.

Es ist bekannt, Strukturen, wie Vertiefungen oder Erhebungen, mittels des sog. Schnittbildverfahrens zu untersuchen. Zu diesem Zweck wird die zu untersuchende Struktur "strukturiert" beleuchtet. Es wird etwa auf der Struktur durch ein optisches System ein beleuchteter Spalt oder ein Gitter mit einem flachen Einfallswinkel abgebildet. Die beleuchteten Auftreffpunkte des Beleuchtungsstrahlenbündels auf die zu untersuchende Struktur werden unter einem vom Einfallwinkel stark verschiedenen Ausfallwinkel beobachtet. Es werden dann Tiefenunterschiede der zu untersuchenden Struktur in Verzerrungen des Spalt-oder Gitterbildes in einer zur Achse des Beobachtungsstrahlenganges senkrechte Ebene umgesetzt. Bei diesem Schnittbildverfahren muß zwischen der Beleuchtungseinrichtung und der Beobachtungseinrichtung eine ausreichend lange Basisstrecke vorhanden sein, um die Beleuchtung und Beobachtung unter stark unterschiedlichen Winkeln zu ermöglichen.

In der Fertigungstechnik tritt das Problem auf, Schweißnähte in Hohlkörpern zu kontrollieren. Solche Hohlkörper weisen häufig eine Öffnung von vermindertem Durchmesser auf.

Die Erfindung sieht eine Schnittbildoptik vor, die durch eine Öffnung mit vermindertem Durchmesser in einen Hohlkörper einführbar ist und die gekennzeichnet ist durch

(a) ein erstes Boroskop zur Erzeugung einer strukturierten Beleuchtung mit einem Schaft und einem am Ende des Schafts angeordneten, abgewinkelten Kopf,

(b) ein zweites Boroskop für die Beobachtung mit einem sich parallel zu dem Schaft des ersten Boroskops erstreckenden Schaft und einem am Ende des Schafts angeordneten, abgewinkelten Kopf und

(c) einen Antrieb zum Verdrehen der Boroskope um die Achsen der Schäfte
- aus einer ersten Stellung, in welcher die beiden Köpfe nebeneinander angeordnet sind,
-in eine zweite Stellung, in welcher die Längsachsen der beiden Köpfe einen Winkel einschließen, so daß eine für die Schnittbildbeobachtung ausreichende Basisstrecke zwischen Beleuchtungs-und Beobachtungsmitteln gebildet ist.

Es wird also zur Lösung der eingangs genannten Aufgabe ein Schnittbildverfahren angewandt.

Zu diesem Zweck wird eine Schnittbildoptik mit zwei Boroskopen für Beleuchtung und Beobachtung vorgesehen, die in einem "zusammengefalteten" Zustand durch die Öffnung in den Hohlkörper einführbar und innerhalb des Hohlkörpers so "aufspannbar" ist, daß die für das Schnittbildverfahren erforderliche Basisstrecke erhalten wird.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 veranschaulicht das Schnittbildverfahren zur Beobachtung von Höhenstrukturen.

Fig. 2 zeigt schematisch eine Schnittbildoptik mit einem ersten und einem zweiten Boroskop für Beleuchtung und Beobachtung.

Fig. 3 zeigt eine Draufsicht auf einen Hohlkörper mit einer Öffnung von vermindertem Durchmesser, durch welche die Schnittbildoptik im "zusammengefalteten" Zustand eingeführt wird.

Fig. 4 zeigt einen Schnitt längs der Linie IV-IV von Fig.3.

Fig. 5 zeigt eine Draufsicht ähnlich Fig.3 bei "aufgespannter" Schnittbildoptik.

Fig. 6 zeigt einen Schnitt längs der Linie IV-IV von Fig.5.

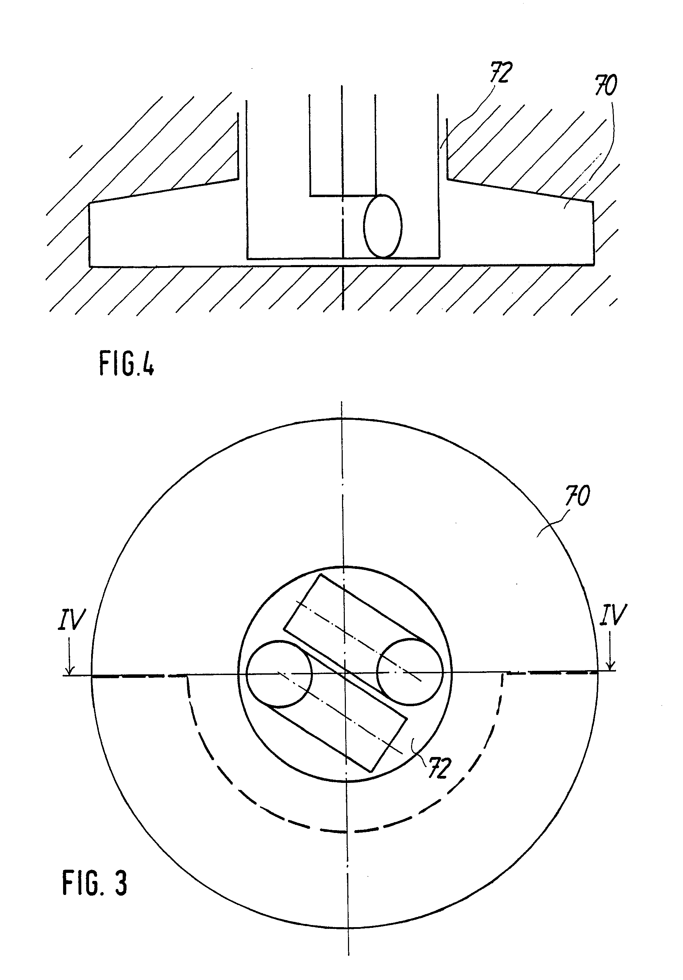

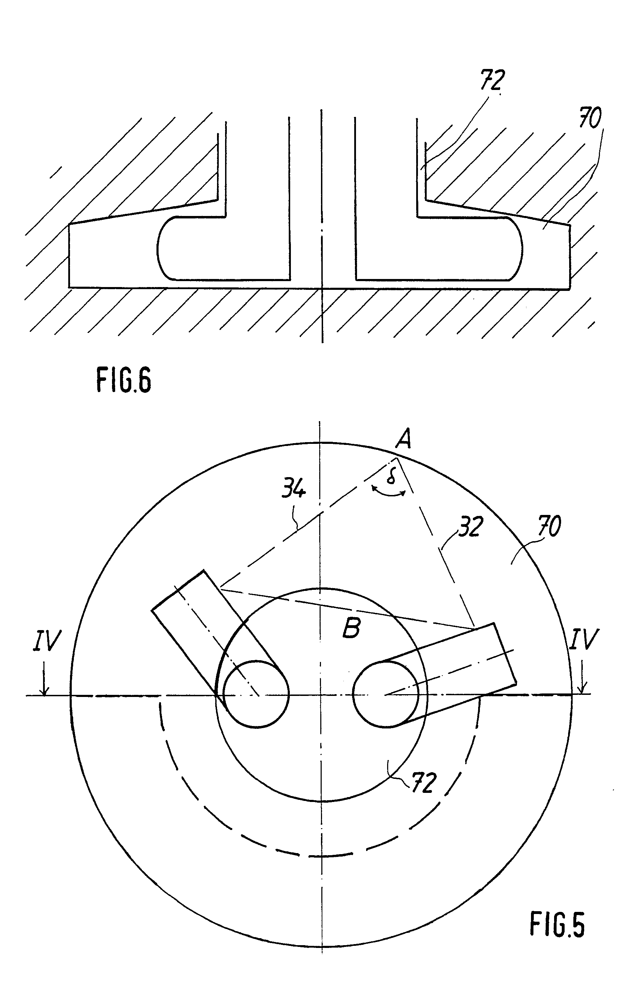

Die Schnittbildoptik enthält ein erstes Boroskop 10 mit einem Schaft 12 und einem am Ende des Schafts 12 angeordneten, abgewinkelten Kopf 14. Die Schnittbildoptik enthält weiterhin ein zweites Boroskop 16 mit einem Schaft 18 und einem am Ende des Schafts 18 angeordneten, abgewinkelten Kopf 20. Der Schaft 18 des zweiten Boroskops 16 verläuft im Abstand parallel zu dem Schaft 12 des ersten Boroskops 10. Die beiden Boroskope sind in Lagern 22,24 bzw. 26,28 um die Achsen der Schäfte 12 bzw. 18 drehbar gelagert. Durch einen Antrieb 30 sind die Boroskope 10 und 16 um die Achsen der Schäfte 12 bz. 18 aus einer ersten, in Fig. 3 und 4 dargestellten Stellung, in welcher die Köpfe 14 und 20 antiparallel zueinander nebeneinander angeordnet sind, in eine zweite Stellung verdrehbar, die in Fig.5 und 6 dargestellt ist. In dieser zweiten Stellung schließen die Längsachsen der beiden Köpfe einen stumpfen Winkel ein, so daß eine für die Schnittbildbeobachtung ausreichende Basisstrecke B (Fig.5) gebildet ist.

Wie aus Fig.5 ersichtlich ist, treten Beleuchtungs-und Beobachtungsstrahlengang 32 bzw. 34 quer zur Längsachse des jeweiligen Kopfes 14 bzw. 20 durch seitliche Fenster 36 bzw. 38 des Kopfes 14 bzw. 20 aus. Der Antrieb 30 enthält ein Zahnrad 40 auf dem Schaft 12 des ersten Boroskops 10 und ein Zahnrad 42 auf dem Schaft 18 des zweiten Boroskops 16 sowie ein Zwischenzahnrad 44 zwischen den beiden Zahnrädern 40 und 42 und ein Ritzel 46, das von einem Stellmotor 48 antreibbar ist. Die beiden Schäfte 12 und 18 werden durch den Antrieb 30 gleichsinnig aus der Stellung von Fig.3 in die Stellung von Fig.5 verschwenkt.

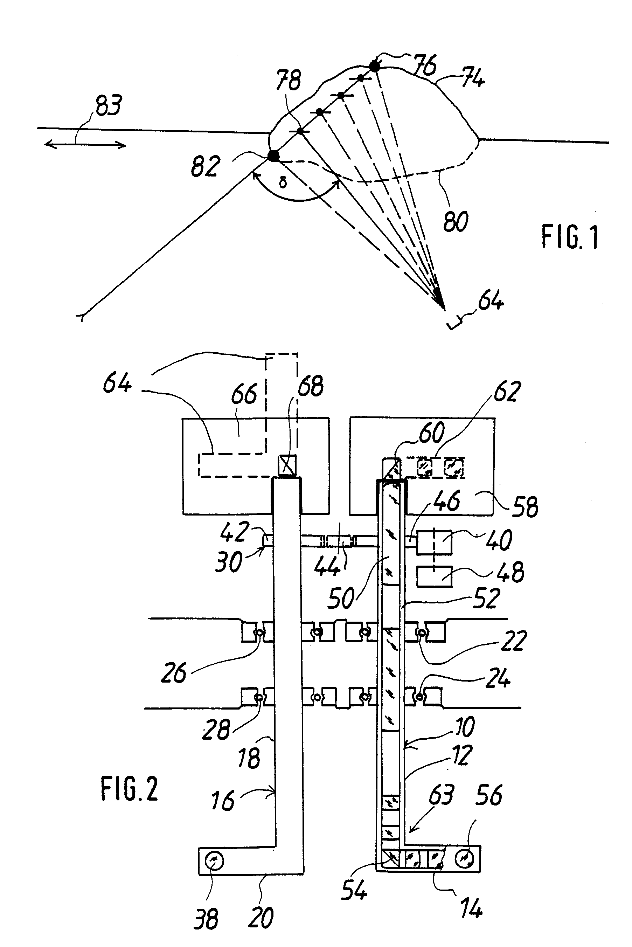

Wie aus Fig.2 ersichtlich ist, enthält jedes Boroskop 10 und 16 eine Folge von Linsen 50 in einer rohrförmigen Fassung 52. Es wird dadurch in bekannter und daher nicht im einzelnen beschriebener Weise ein Object über mehrere Zwischenabbildungen durch das Boroskop 10 und 16 hindurch von einem Ende des Boroskops zum anderen abgebildet. Im vorliegenden Fall wird der Strahlengang jeweils durch ein Umlenkmittel (Prisma) 54 aus dem Schaft 12 in den abgewinkelten Kopf 14 bzw. aus dem Kopf 20 in den Schaft 18 umgelenkt. Ein Spiegel oder Prisma 56 lenkt den Strahlengang auf der Seite des Kopfes 14 bzw. 20 jeweils quer zur Achse des Kopfes durch das Fenster 36 bzw. 38.

Die nicht im einzelnen dargestellte Beleuchtungsanordnung ist in einem langgestreckten, stillstehenden Gehäuse 58 untergebracht. Das Gehäuse 58 ist an dem äußeren, dem Kopf 14 abgewandten Ende des Schafts 12 des ersten Boroskops 10 angeordnet. Das Gehäuse 58 erstreckt sich quer zur Längschse des Schafts 12. Es sind optische Umlenkmittel 60 in Form eines Prismas vorgesehen, durch welche der Strahlengang der Beleuchtungsanordnung in den Schaft 12 des ersten Boroskop 10 umlenkbar ist. Teile 62 des abbildenden optischen Systems sind in dem Gehäuse 58 vorgesehen. Ein Teil des Austrittsobjektivs 63 sitzt in dem Schaft 12. Dadurch wird die Länge des Kopfes 14 verringert. Das vermindert wiederum das Trägheitsmoment des Boroskops 10 oder 16.

Durch das abbildende optische System wird eine strukturierte Beleuchtung, beispielsweise ein Spaltbild, an einer Stelle A erzeugt, deren Struktur untersucht werden soll. Die Schnittbildoptik enthält weiterhin eine photoelektrische Empfängeranordnung 64, die in Fig.1 schematisch dargestellt ist. Die Empfängeranordnung 64 ist in einem langgestreckten, stillstehenden Gehäuse 66 angeordnet. Das Gehäuse 66 ist an dem äußeren, dem Kopf 20 abgewandten Ende des Schafts 18 des zweiten Boroskops 16 angeordnet. Das Gehäuse 66 liegt quer zur Längsachse des Schafts 18. Auch hier sind optische Umlenkmittel in Form eines Prismas 68 vorgesehen, durch welche der Strahlengang des zweiten Boroskops 16 auf die photoelektrische Empfängeranordnung umlenkbar ist.

Die beschriebene Anordnung arbeitet wir folgt:
Es sollen Schweißnähte innerhalb eines Hohlraums 70 kontrolliert werden, der nur durch eine Öffnung 72 von vermindertem Durchmesser zugänglich ist. Die Boroskope 10 und 16 werden durch den Stellmotor 48 zunächst in die in Fig.3 dargestellte erste Stellung geschwenkt. In dieser Stellung bilden die beiden Boroskope 10 und 16 mit den Köpfen 14 und 20 eine sehr kompakte, "zusammengefaltete" Anordnung, die sich durch die Öffnung 72 in den Hohlraum 70 einführen läßt. Dort wird dann die Schnittbildoptik "aufgespannt", indem durch den Stellmotor 48 beide Boroskope 10 und 16 im Uhrzeigersinn von Fig.3 in die in Fig.5 dargestellte Stellung verschwenkt werden.

In dieser Stellung ist zwischen den Fenstern 36 und 38 eine Basisstrecke B gebildet, die länger ist als der Durchmesser der Öffnung 72. Es wird durch die Beleuchtungsanordnung über das erste Boroskop 10 im Strahlengang 32 ein Spaltbild am Ort A erzeugt. Dieses Spaltbild wird im Strahlengang 34 über das Boroskop 16 auf die photoelektrische Empfängeranordnung 64 abgebildet. Die photoelektrische Empfängeranordnung 64 kann beispielsweise ein Mosaikdetektor sein. Die Strahlengänge 32 und 34 bilden einen Winkel $\delta$.

Wie aus Fig.1 ersichtlich ist, hängt der Winkel, unter welchem die photoelektrische Empfängeranordnung 64 das Spaltbild beobachtet, von der Lage der Oberfläche ab, auf welche der das Spaltbild erzeugende Strahlengang auftrifft. Befindet sich in der Oberfläche eine Vertiefung 74, wie in Fig.1 angedeutet, dann erscheint das Spaltbild für die photoelektrische Empfängeranordnung 64 am Ort 76. Ist die Oberfläche plan, erscheint das Spaltbild am Ort 78. Ist auf der Oberfläche in Vorsprung 80 gebildet, wie in Fig.1 gestrichelt dargestellt, erscheint das Spaltbild am Ort 82. Es wird so durch das Schnittbildverfahren der Tiefenverlauf des Oberflächenstreifens, auf welchem das Spaltbild erzeugt wird, in eine zweidimensionale Verzerrung des von der Empfängeranordnung 64 beobachteten Spaltbildes umgesetzt. Dieses verzerrte Spaltbild kann dann durch Verarbeitung der Signale der Empfängeranordnung beispielsweise zur Kontrolle einer Schweißnaht ausgenutzt werden. Der Umfang des Hohlraumes 70 wird dabei durch Relativbewegung des Werkstücks und der Schnittbildoptik abgetastet, wie durch Pfeil 83 in Fig.1 angedeutet ist.

Statt einer photoelektrischen Empfängeranordnung kann auch ein anderer optischer Sensor wirksam werden, beispielsweise das menschliche Auge oder eine Kamera.

## Ansprüche

1. Schnittbildoptik, die durch eine Öffnung (72) mit vermindertem Durchmesser in einen Hohlkörper einführbar ist, gekennzeichnet durch

(a) ein erstes Boroskop (10) zur Erzeugung einer strukturierten Beleuchtung mit einem Schaft (12) und einem am Ende des Schafts (12) angeordneten, abgewinkelten Kopf (14),

(b) ein zweites Boroskop (16) für die Beobachtung mit einem sich parallel zur dem Schaft (12) des ersten Boroskops (10) erstreckenden Schaft (18) und einem am Ende des Schafts (18) angeordneten, abgewinkelten Kopf (20) und

(c) einen Antrieb (30) zum Verdrehen der Boroskope (10,16) um die Achsen der Schäfte (12,18)

-aus einer ersten Stellung, in welcher die beiden Köpfe (14,20) nebeneinander angeordnet sind,

-in eine zweite Stellung, in welcher die Längsachsen der beiden Köpfe (14,20) einen Winkel einschließen, so daß eine für die Schnittbildbeobachtung aus reichende Basisstrecke zwischen Beleuchtungs-und Beobachtungsmitteln gebildet ist.

2. Schnittbildoptik nach Anspruch 1, dadurch gekennzeichnet, daß Beleuchtungs-und Beobachtungsstrahlengang (32,34) quer zu der Längsachse des jeweiligen Kopfes (14,20) austreten.

3. Schnittbildoptik nach Anspruch 2, dadurch gekennzeichnet, daß

(a) die Schäfte (12,18) der beiden Boroskope (10,16) im Abstand voneinander verlaufen und

(b) die Köpfe (14,20) der beiden Boroskope (10,16) in der besagten ersten Stellung antiparallel zueinander angeordnet ist.

4. Schnittbildoptik nach Anspruch 3, dadurch gekennzeichnet, daß die beiden Boroskope (10,16) durch den Antrieb (30) aus der ersten Stellung gleichsinnig in die zweite Stellung verdrehbar sind.

5. Schnittbildoptik nach Anspruch 1, dadurch gekennzeichnet, daß

(a) eine Beleuchtungsanordnung (62) in einem langgestreckten, stillstehenden Gehäuse (58) untergebracht ist, das an dem äußeren, dem Kopf (14) abgewandten Ende des Schafts (12) des ersten Boroskops (10) angeordnet ist und sich quer zur Längsachse des Schafts (12) erstreckt und

(b) optische Umlenkmittel (60) vorgesehen sind, durch welche der Strahlengang der Beleuchtungsanordnung in den Schaft (12) des ersten Boroskops (10) umlenkbar ist.

6. Schnittbildoptik nach Anspruch 5, dadurch gekennzeichnet, daß

(a) eine photoelektrische Empfängeranordnung (64) in einem langgestreckten, stillstehenden Gehäuse (66) angeordnet ist, das an dem äußeren, dem Kopf (20) abgewandten Ende des Schafts (18) des zweiten Boroskops (16) angeordnet ist und sich quer zur Längsachse des Schafts (18) erstreckt, und

(b) optische Umlenkmittel (68) vorgesehen sind, durch welche der Strahlengang des zweiten Boroskops (16) auf die photoelektrische Empfängeranordnung (64) umlenkbar ist.

FIG. 1

FIG.2

FIG.4

FIG. 3

FIG.6

FIG.5